Europäisches Patentamt

European Patent Office

Office européen des brevets

(11) Veröffentlichungsnummer: **0 313 035**
**A2**

(19)
(12) **EUROPÄISCHE PATENTANMELDUNG**

(21) Anmeldenummer: **88117434.6**

(22) Anmeldetag: **19.10.88**

(51) Int. Cl.⁴: **B29C 45/17**

(30) Priorität: **22.10.87 AT 2790/87**

(43) Veröffentlichungstag der Anmeldung:
**26.04.89 Patentblatt 89/17**

(84) Benannte Vertragsstaaten:
**AT BE CH DE FR GB IT LI NL SE**

(71) Anmelder: **Engel Maschinenbau Gesellschaft m.b.H.**

**A-4311 Schwertberg(AT)**

(72) Erfinder: **Scheuchenegger, Josef**
**Friedeggstrasse 7**
**A-4311 Schwertberg(AT)**
Erfinder: **Kappelmüller, Werner**
**Lina 8**
**A-4311 Schwertberg(AT)**
Erfinder: **Dirneder, Franz**
**Doppel 1**
**A-4311 Schwertberg(AT)**

(74) Vertreter: **Hofinger, Engelbert et al**
**Torggler-Hofinger Wilhelm-Greil-Strasse 16**
**A-6020 Innsbruck(AT)**

(54) Schliesseinheit für eine Spritzgiessmaschine.

(57) Eine Schließeinheit für eine Spritzgießmaschine mit einem Maschinenrahmen, einer feststehenden Formträgerplatte (1) und einer Stirnplatte (3), die über Holme (4) verbunden sind, sowie einer auf den Holmen (4) mittels einer Schließeinrichtung verschiebbaren beweglichen Formträgerplatte (2). Mindestens einer der Holme (4) ist mittels lösbarer Halteeinrichtungen an der feststehenden Formhalteplatte (1) abziehbar verankert und in der Stirnplatte (3) verschiebbar gehalten. Arretiereinrichtungen für den Holm (4) sind vorgesehen, die durch mindestens eine Steuereinrichtung betätigbar sind, die elektrische, hydraulische und/oder pneumatische Löse- und Verriegelungseinrichtungen umfaßt. Der Holm (4) ist mittels eines hydraulisch beaufschlagten Kolbens (17) in der beweglichen Formträgerplatte (2) klemmbar und durch mehrmaliges Nachfassen vollständig aus dem Formbereich entfernbar.

Fig. 2

Die Erfindung bezieht sich auf eine Schließeinheit für eine Spritzgießmaschine mit einem Maschinenrahmen, einer ortsfesten Formträgerplatte und einer Stirnplatte, die über Holme verbunden sind, sowie einer auf den Holmen mittels einer Schließeinrichtung verschieblich bewegbaren Formträgerplatte, wobei mindestens einer der Holme mittels lösbarer Halteeinrichtungen an der feststehenden Formhalteplatte abziehbar verankert ist und auf den Holm eine Holmmutter aufgeschraubt ist, die sich an der Rückseite der feststehenden Formträgerplatte abstützt.

Eine Spritzgießmaschine mit einer derartigen Schließeinheit ist beispielsweise aus der anmeldereigenen europäischen Patentschrift 0 088 100 bekannt.

Als nachteilig ist bei derartigen Schließeinheiten anzusehen, daß die Holme, die die feststehende Formträgerplatte und die Stirnplatte verbinden und auf denen die bewegliche Formträgerplatte geführt ist, beim Austausch der Spritzgießwerkzeuge hinderlich sind. Diese Holme sind nach dem derzeit bekannten Stand der Technik jedoch notwendig, um die während des Spritzgießens auftretenden hohen Axialkräfte aufnehmen zu können.

Aus der DE-OS 20 63 977 und der DE-AS 24 59 025 sind Spritzgießmaschinen bekannt, bei denen die Holme aus der ortsfesten Formträgerplatte herausgezogen werden können. Sie stehen jedoch formseitig aus der beweglichen Formträgerplatte hervor. Die daran befestigte Formhälfte kann daher nur mit den üblichen Schwierigkeiten ausgetauscht werden.

Aufgabe der Erfindung ist es, eine Schließeinheit für eine Spritzgießmaschine der eingangs erwähnten Art dahin gehend zu verbessern, daß das Austauschen der Spritzgießwerkzeuge leichter und somit schneller vonstatten gehen kann. Insbesondere soll der Werkzeugbereich an der Formträgerplatte leicht zugänglich sein.

Dies wird erfindungsgemäß dadurch erreicht, daß der Holm mittels eines hydraulisch beaufschlagbaren Kolbens od. dgl. in der bewegbaren Formträgerplatte klemmbar und in der Stirnplatte verschiebbar gehalten ist.

Durch die erfindungsgemäße Ausführung der Schließeinheit kann jeder Holm durch mehrmaliges "Nachgreifen" der beweglichen Formträgerplatte soweit zurückgeschoben werden, daß er bei geöffneter Formträgerplatte formseitig nicht aus der Formträgerplatte hervorsteht. Der Formbereich zwischen den Formträgerplatten ist daher frei und die Formhälften können ohne Behinderung durch die Holme ausgetauscht werden.

Dabei ist es möglich, den Schließmechanismus der Spritzgießmaschine zum Verschieben des Holmes zu verwenden, das heißt, der schwere Holm kann auf einfache Art mittels der beweglichen Formträgerplatte und der Hydraulik des Schließmechanismus von der feststehenden Formträgerplatte abgezogen und nach dem Austausch des Werkzeuges wieder an diese herangebracht werden.

Ein Ausführungsbeispiel der Erfindung sieht vor, daß an der Formträgerplatte ein Motor lagert, mittels dem das Verschrauben der Holmmutter erfolgt, wobei sich unmittelbar vor der Holmmutter ein Trägerzapfen befindet, auf den die vom Holm abgeschraubte Holmmutter aufgeschoben wird.

Vorteilhaft ist der Trägerzapfen mit einem Gewinde versehen, auf welches die Holmmutter aufschraubbar ist, während sie vom Holm abgeschraubt wird.

An der Holmmutter ist außen ein Zahnkranz ausgebildet, mit dem ein Ritzel eines Elektromotors kämmt, das heißt, daß die Mutter mittels des Elektromotors vom Holm abgeschraubt und auf den Trägerzapfen aufgeschraubt werden kann, ebenso wie umgekehrt.

Während des Betriebes der Spritzgießmaschine bleibt die Motorbremse im Elektromotor immer angezogen. Dieser dient so als Mutternsicherung.

Weiters ist vorteilhaft vorgesehen, daß der Holm bei der Stirnplatte mit einem aufgeschraubten Holmzahnrad versehen ist, das mit an der Stirnplatte gelagerten Hydraulikkolben über Keilspannelemente gesichert ist, und daß ein pneumatisch beaufschlagter Kolben vorgesehen ist, der das Holmzahnrad verdrehsicher auf dem Holm hält, wenn dieser von der feststehenden Formträgerplatte abgezogen ist.

Es können drei hydraulisch beaufschlagte Keilspannelemente vorgesehen sein, die zueinander um 45° versetzt sind.

Weiters weist die Spritzgießmaschine am Holm vorteilhaft einen Pneumatikzylinder auf, der das Holmzahnrad auf dem Holm verdrehsicher hält, wenn dieser von der feststehenden Formträgerplatte abgezogen ist.

Die erfindungsgemäße Spritzgießmaschine ermöglicht ein vollautomatisches Herausziehen eines Holmes oder mehrerer Holme aus beiden Formhälften.

Nachfolgend werden zwei Ausführungsbeispiele der Erfindung anhand der Figuren der beiliegenden Zeichnungen eingehend beschrieben.

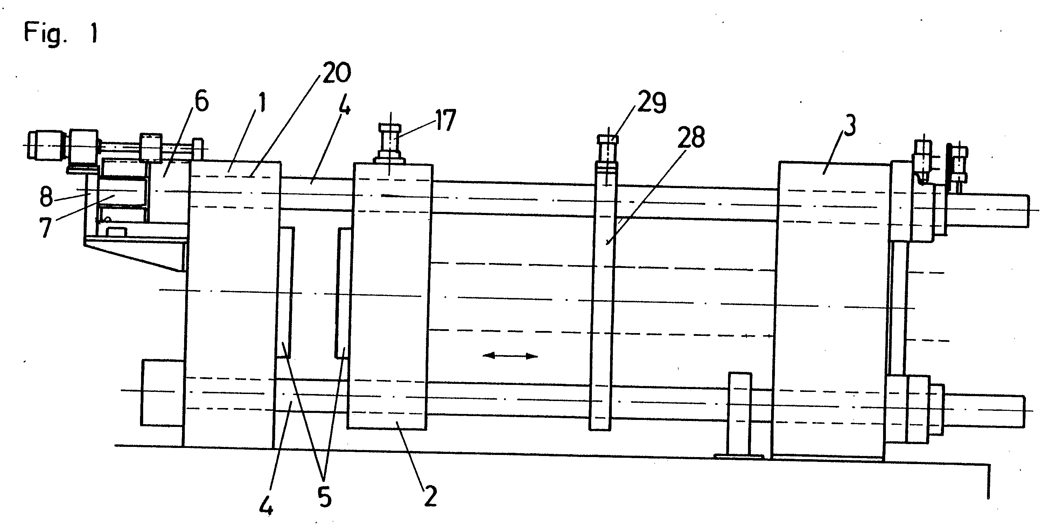

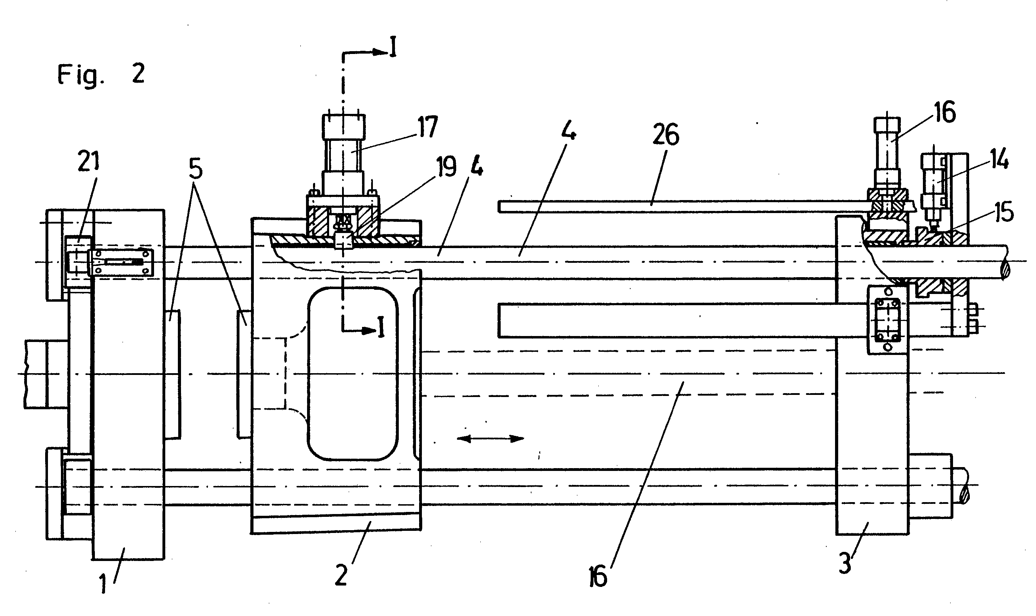

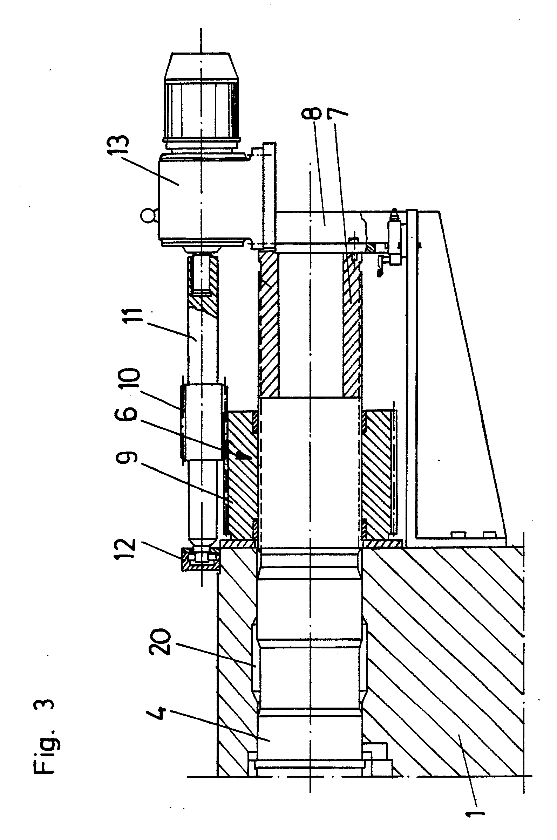

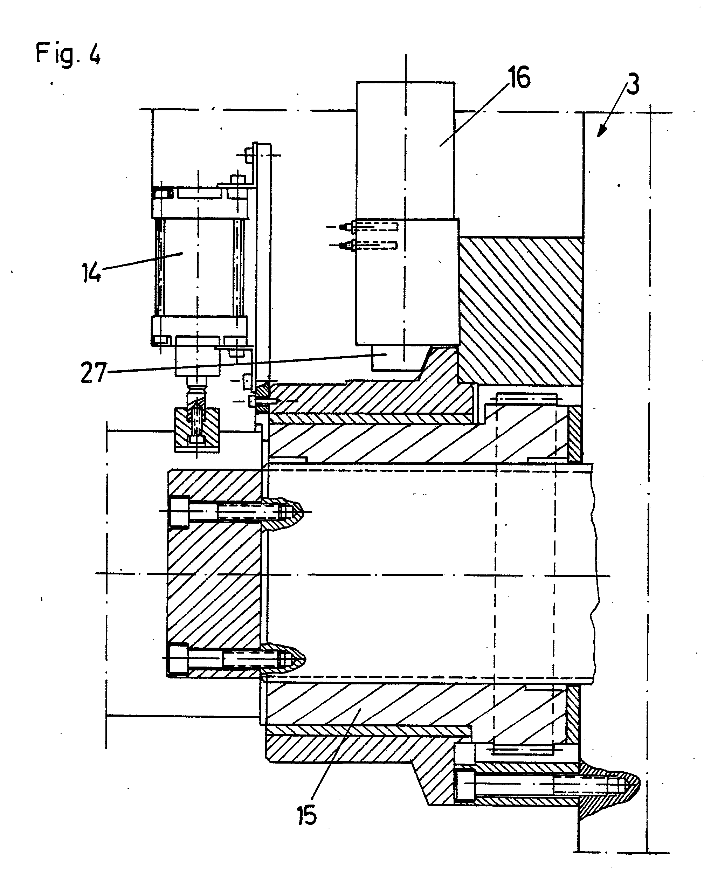

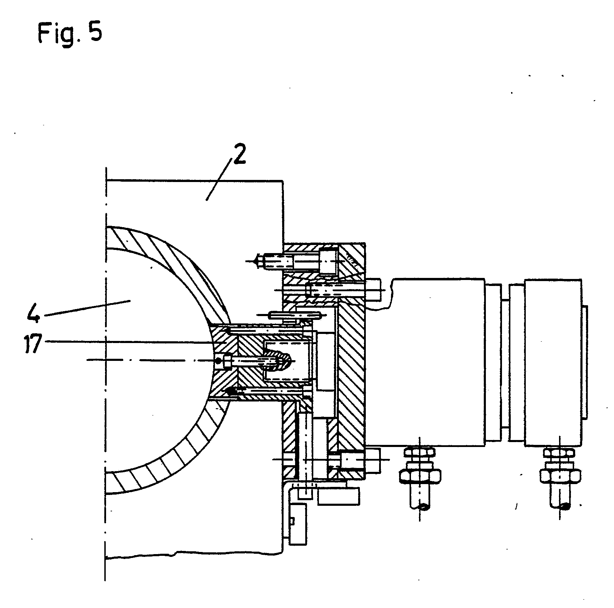

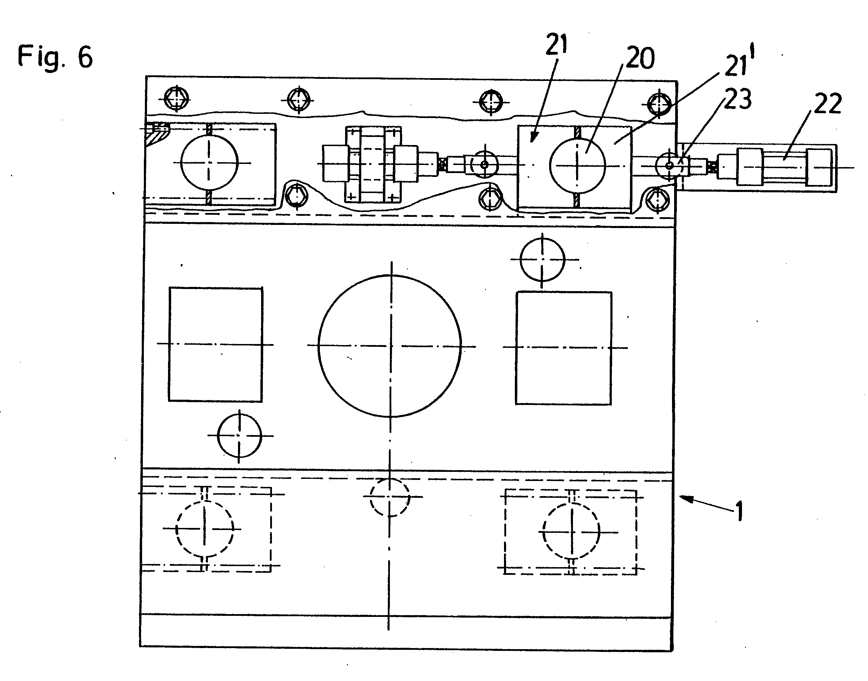

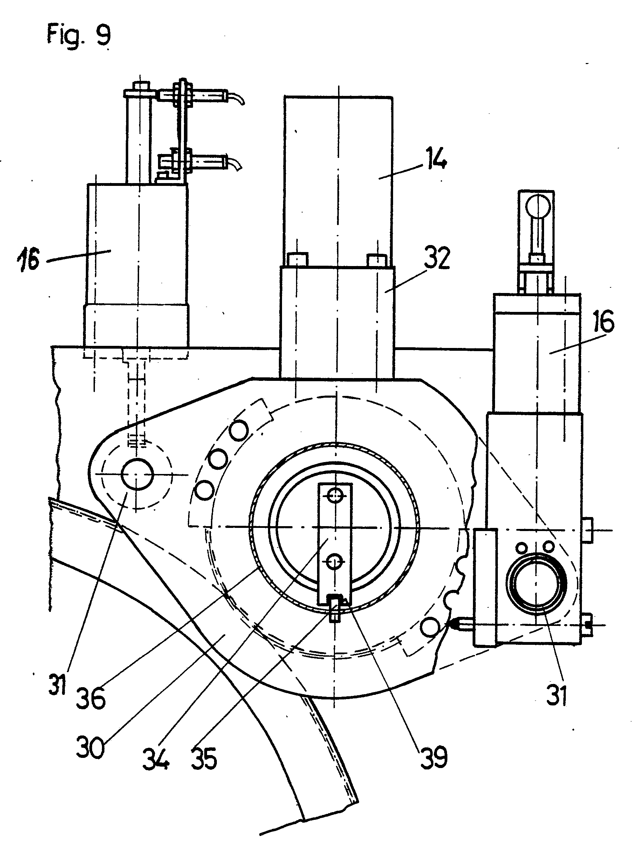

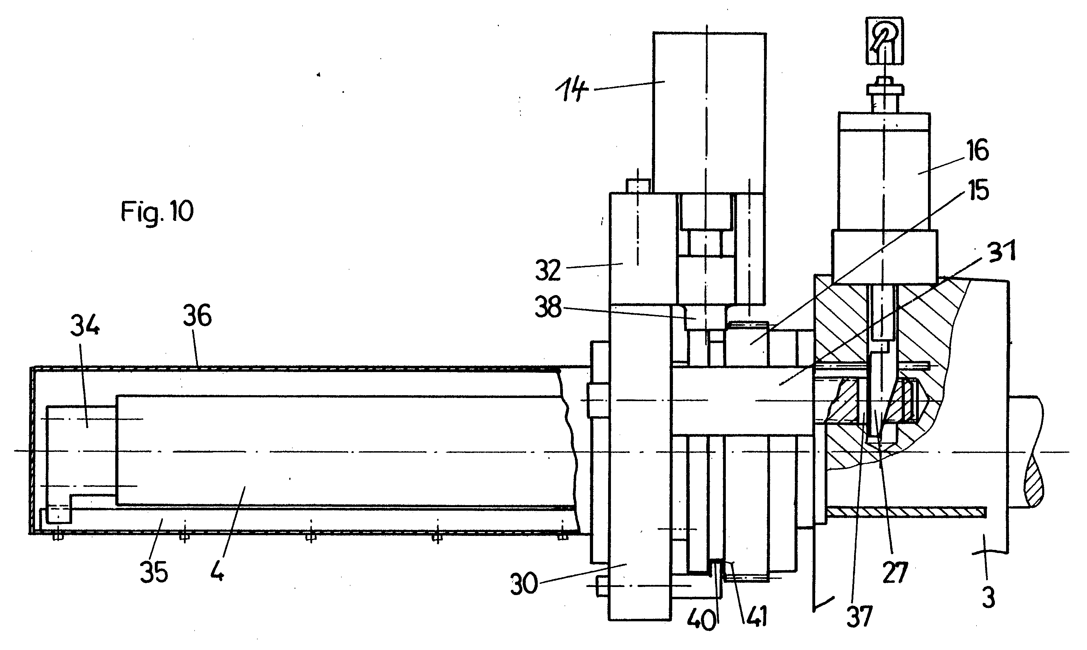

Die Fig. 1 ist eine schematisch gehaltene Seitenansicht einer Spritzgießmaschine mit einer erfindungsgemäßen Schließeinheit, die Fig. 2 ist eine Draufsicht auf ein zweites Ausführungsbeispiel, die Fig. 3 zeigt einen Axialschnitt durch den Verankerungsbereich des abziehbaren Holmes an der feststehenden Formträgerplatte bei einer Schließeinheit gemäß Fig. 1, die Fig. 4 zeigt einen Axialschnitt durch den Verankerungsbereich des abziehbaren Holmes an der Stirnplatte, die Fig. 5 zeigt einen Schnitt nach der Linie I-I der Fig. 2, die Fig. 6 zeigt eine Stirnansicht auf die feststehende Formaufspannplatte des Ausführungsbeispieles gemäß Fig. 2, die Fig. 7 und 8 zeigen Schnitte durch zwei Ausführungsbeispiele der Holmmuttern, die Fig. 9 zeigt einen Stirnanzieher der Holmmutterbefestigung gemäß einem weiteren Ausführungsbeispiel und die Fig. 10 zeigt einen Längsschnitt durch diese Holmmutterbefestigung.

Wie insbesondere aus Fig. 1 und 2 ersichtlich, ist die feststehende Formträgerplatte mit 1, die bewegliche Formträgerplatte mit 2 und die Stirnplatte mit dem Bezugszeichen 3 bezeichnet. Die Stirnplatte 3, an der sich der Schließmechanismus abstützt, wird in der Praxis auch als die linke Stirnplatte bezeichnet, da sie sich links vom Bedienungsmann befindet.

Wie bereits erwähnt, sind die feststehende Formträgerplatte 1 und die Stirnplatte 3 über vier Holme 4 verbunden, von denen in den Fig. 1 und 2 jeweils zwei sichtbar sind.

Die bewegliche Formträgerplatte 2 lagert auf den Holmen 4 und wird von der strichpunktiert angedeuteten Schließeinrichtung, die sich an der Stirnplatte 3 abstützt, in der Richtung des Doppelpfeiles in den Fig. 1 und 2 bewegt. Die Schließeinrichtung wird im allgemeinen ein Kniehebelmechanismus sein. Bei kleineren Mechanismen kann jedoch eine hydraulische Kolben-Zylindereinheit genügen.

Um den Austausch der Werkzeuge 5 an der feststehenden Formträgerplatte 1 und an der beweglichen Formträgerplatte 2 zu erleichtern, ist in den gezeigten Ausführungsbeispielen einer der oberen Holme 4 abziehbar in der feststehenden Formträgerplatte 1 und der Stirnplatte 3 gelagert.

In den Fig. 1 und 2 sind zwei verschiedene Arten der Befestigung des abziehbaren Holmes 4 an der feststehenden Formträgerplatte 1 gezeigt.

Wie aus der Fig. 1 ersichtlich, ragt der Holm 4 jeweils durch eine Öffnung 20 in der feststehenden Formträgerplatte 1.

Gemäß dem Ausführungsbeispiel der Fig. 1 ist auf dem Holm 4 an seinem Ende, das durch die Formträgerplatte 1 ragt, eine Holmmutter 6 aufgeschraubt. Vor der Holmmutter 6 bzw. vor dem Ende des Holmes 4 befindet sich ein Trägerzapfen 7, der von einem Rahmen 8 getragen wird. Der Rahmen 8 ist an der feststehenden Formträgerplatte 1 befestigt.

Der Trägerzapfen 7 ist mit einem Gewinde versehen, das dem Gewinde am Ende des Holmes 4 entspricht, sodaß die Mutter vom Holm 4 abgeschraubt und auf den Trägerzapfen 7 aufgeschraubt werden kann.

Wie insbesondere aus der Fig. 3 ersichtlich, ist die Holmmutter 6 mit einem Zahnkranz 9 versehen. In diesen Zahnkranz 9 greift ein Ritzel 10 ein.

Das Ritzel 10 ist auf einer Welle 11 gelagert, die mit ihrem freien Ende an einer Lagerstelle 12 an der feststehenden Formträgerplatte 1 gelagert ist und das von einem Elektromotor 13 angetrieben wird. Der Elektro motor 13 dreht über die Welle 11 das Ritzel 10 und schraubt somit die Holmmutter 6 je nach Drehrichtung vom Holm 4 ab oder auf diesen auf.

Durch die erfindungsgemäße Ausführung ist es leicht, die relativ schwere Holmmutter 6 vom Holm 4 zu lösen, wodurch der Holm 4 von der feststehenden Formträgerplatte 1 abgezogen werden kann. Ebenso leicht ist es, die Holmmutter 6 nach erfolgtem Werkzeugwechsel wieder auf den Holm 4 aufzuschrauben. Es ist von besonderer Bedeutung, daß die Holmmutter 6 nicht nach dem Abschrauben abgesenkt und zum Aufschrauben auf den Holm 4 wieder angehoben werden muß, sondern unmittelbar vor dem Holmende auf dem Trägerzapfen 7 gelagert ist.

Im Ausführungsbeispiel nach den Fig. 2 und 6 bis 8 wird die Holmmutter 21 von zwei auseinanderziehbaren Holmmutterhälften 21' gebildet. Das Verschieben der Holmmutterhälften 21' erfolgt über Kolben-Zylindereinheiten 22 und Gestänge 23.

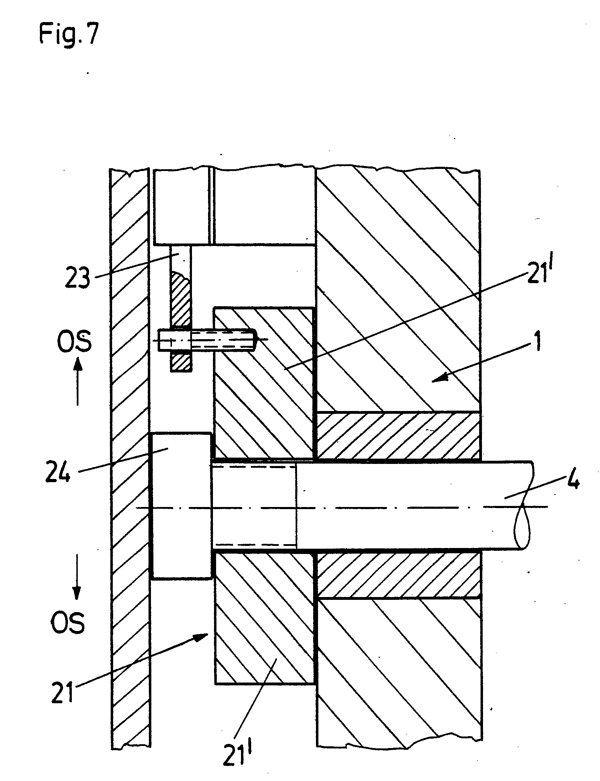

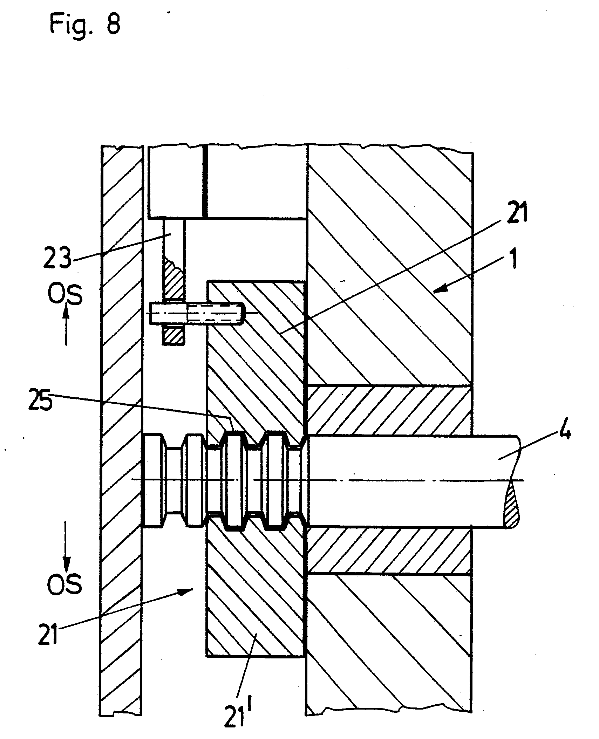

Die Holmmutter 21 greift dabei, wie aus den Fig. 7 und 8 ersichtlich, entweder hinter einem Kopf 24 des Holmes 4 ein, oder in Nuten 25.

Die Nuten 25 können auch durch eine umlaufende Gewindenut ersetzt werden.

Der Kopf 24 kann ebenfalls von einer auf den Holm 4 aufgeschraubten Mutter gebildet werden.

Die Kolben-Zylindereinheiten 22 bewegen die Holmmutterhälften 21 in der Richtung der Pfeile OS. Die Kolben-Zylindereinheiten 22 können sowohl hydraulisch als auch pneumatisch beaufschlagt sein. Sie dienen lediglich der Bewegung der Holmmutterhälften 21'. Der Halt des Holmes 4 während des Betriebes wird durch den reinen Formschluß zwischen der Holmmutter 21 und dem Holm 4 erzielt.

Der Funktionsablauf der automatischen Holmziehvorrichtung ist der folgende:

Beim Ausführungsbeispiel gemäß Fig. 1 dreht der auf der feststehenden Formträgerplatte 1 gelagerte Motor 13 die Holmmutter 6 vom Holmende ab und auf den davor angeordneten Trägerzapfen 7 auf. Die Endlage der Holmmutter 6 ist in beiden Endlagen endschalterüberwacht.

Die Motorbremse des Motors 13 bleibt im Produktionsbetrieb immer angezogen und somit dient der Motor 13 gleichzeitig als Muttersicherung für die Holmmutter 6.

Beim Ausführungsbeispiel gemäß der Fig. 2 verschieben die Kolben-Zylindereinheiten 22 die Holmmutterhälften 21' nach außen, d.h. weg vom Holm 4, der dadurch im Bereich der feststehenden Formträgerplatte gelöst wird.

Ist der Holm 4 in bezug auf die feststehende Formträgerplatte 1 gelöst, wird der Pneumatikzylinder 14 bei der Zylinderplatte 3 ausgefahren und verspannt somit das Holmzahnrad 15 mit dem Holm 4. Es ist weiters eine Verdrehsicherung 26 vorgesehen, die ein Verdrehen der Einheit Holm 4 - Zylinder 14 verhindert.

Das Spannen des Pneumatikzylinders 14 ist wiederum endschalterüberwacht.

Als nächster Schritt werden die drei Keilspannelemente 27 an der Stirnplatte 3 gelöst und über die Kolben-Zylindereinheiten 16 vom Holmzahnrad 15 abgezogen. Beide Endlagen der Hydraulikzylinder der Keilspannelemente 27 sind entschalterüberwacht. Dann wird der Hydraulikzylinder 17 auf der beweglichen Formträgerplatte 2 ausgefahren und der Holm 4 wird mit der beweglichen Formträgerplatte 2 verspannt.

Über den Schließmechanismus 18 der Spritzgießmaschine wird die Form geöffnet, wodurch die bewegliche Formträgerplatte 2 den Holm 4, der ja mit ihr verspannt ist, von der feststehenden Formträgerplatte 1 abzieht. Die Geschwindigkeit, mit der die Formträgerplatte 2 verfahren und somit der Holm 4 bewegt wird, beträgt ca. 10 % von V-maximal der Geschwindigkeit des Schließmechanismus.

Im allgemeinen wird es notwendig sein, den Holm 4 weiterzubewegen, das heißt, es muß nachgegriffen werden. Zu diesem Zweck werden die Haltebacken der Zylinder 29 auf der Hebelführung 28 ausgefahren und der Zylinder 17 auf der beweglichen Formträgerplatte 2 eingefahren und somit die Formträgerplatte 2 vom Holm 4 gelöst. Die Formträgerplatte 2 kann nun in die Schließposition gefahren werden, ohne daß Gefahr besteht, daß der Holm 4 unbeabsichtigt mitgenommen wird. Anschließend wird wieder der Haltebacken des Zylinders 17 ausgefahren und der gleichausgebildete Haltebacken des Zylinders 29 auf der Hebelführung 28 eingefahren. Die Formträgerplatte 2 wird über den Schließmechanismus 18 geöffnet und der Holm 4 weiter gezogen. Die Hebelführung 28 ist über nicht gezeigte Streben mit der linken Stirnplatte 3 fix verbunden.

Die Hebelführung 28 ist lediglich in der Fig. 1 eingezeichnet. Die Klemmvorrichtung des Zylinders 29 entspricht der des Zylinders 17 der beweglichen Formträgerplatte 2.

Die Formträgerplatte 2 wird wieder von der feststehenden Formträgerplatte 1 weggezogen, das heißt, die Form 5 wird geöffnet und der Holm 4 weiter von der feststehenden Formträgerplatte 1 entfernt.

Dieser Vorgang wird so oft wiederholt bis der gewünschte Abstand zwischen dem Ende des Holmes 4 und der fest stehenden Formträgerplatte 1 erzielt ist, das heißt, bis man den notwendigen Freiraum zum Austauschen des Werkzeuges 5 geschaffen hat.

Der Einbau des Holmes 4, das heißt dessen Verspannen mit der feststehenden Formträgerplatte 1, erfolgt in umgekehrter Reihenfolge.

Im Ausführungsbeispiel nach den Fig. 9 und 10 werden die Holmzahnräder 15 von einer Stirnplatte 30 abgedeckt. Die Stirnplatte 30 ist mittels zweier Bolzenkörper 31 mit der linken Stirnplatte 3 verbunden. Dabei sind auf der Stirnplatte 3 die Zylinder 16 befestigt, die mit den ausfahrbaren Keilspannelementen 27 in Löcher 37 in den Bolzenkörpern 31 ragen.

Auf der Stirnplatte 30 lagert eine Zwischenplatte 32, an der wiederum ein Zylinder 14 gelagert ist. Mittels des Zylinders 14 ist ein Anpreßblock 38 ausfahrbar, der im ausgefahrenen Zustand auf das Holmzahnrad 15 drückt und dieses klemmend hält.

Der Holm 4 ist an seinem hinteren Ende mit einem Ansatz 34 versehen, der unten eine Nut 39 aufweist, in die eine Feder 35 ragt. Die Feder 35 ist an einer Blechabdeckung 36 befestigt und die Blechabdeckung 36 ist wiederum mit der Stirnplatte 30 starr verbunden.

Bei normalem Spritzbetrieb ist der Anpreßblock 38 eingefahren und das Holmzahnrad 15 ungeklemmt. Die Stirnplatte 30 wird jedoch über die Bolzenkörper 31 von den Keilspannelementen 27 mittels der Zylinder 16 gehalten.

Soll der Holm 4 abgezogen werden, wird der Anpreßblock 38 durch den Zylinder 14 ausgefahren und klemmt das Holmzahnrad 15. Die Keilspannelemente 27 werden aus den Bolzenkörpern 31 herausgezogen.

Das Holmzahnrad 15 und der Holm 4 sind nun über den Anpreßblock 38, die Zwischenplatte 32, die Stirnplatte 30, die Blechabdeckung 36, die Feder 35 und den Ansatz mechanisch miteinander verbunden.

An der Stirnplatte 30 ist ein hakenartiger Ansatz 40 befestigt, der in eine Nut 41 des Holmzahnrades 15 ragt.

Nachdem der Holm 4 wiederum mit der feststehenden Formträgerplatte 1 verankert wurde, das heißt, die Holmmutter 6 wieder auf dem Holm 4 aufgeschraubt ist bzw. die Holmmutterhälften 21' der Holmmutter 21 wieder mit dem Holm 4 formschlüssig in Eingriff sind, erfolgt bei einer Schließkraft von 30 % der Maximalschließkraft die Überprüfung der 4 Holmdehnungen. Liegen die Abweichungen im Toleranzbereich, kann die Spritzgießmaschine in Betrieb gehen.

Die Keilspannelemente 27 auf der Zylinderplatte 3 müssen im Betrieb immer gespannt sein. Die Überwachung erfolgt durch Endschalter. Der Druckschalter ist ein 3-Positionen-Schalter. Er darf im Produktionsbereich zwischen der oberen und mittleren Position schwanken. Bei Ausfall einer der beiden Sicherheitsüberwachungen müssen alle Schließbewegungen gesperrt sein.

Die Zylinder 16 der Keilspannelemente 27 werden durch ein eigenes Hydraulikaggregat (5 = 350 bar) versorgt.

## Ansprüche

1. Schließeinheit für eine Spritzgießmaschine mit einem Maschinenrahmen, einer ortsfesten Formträgerplatte (1) und einer Stirnplatte (3), die über Holme (4) verbunden sind, sowie einer auf den Holmen (4) mittels einer Schließeinrichtung verschieblich bewegbaren Formträgerplatte (2), wobei mindestens einer der Holme (4) mittels lösbarer Halteeinrichtungen an der feststehenden Formhalteplatte (1) abziehbar verankert ist und auf den Holm (4) eine Holmmutter (6) aufgeschraubt ist, die sich an der Rückseite der feststehenden Formträgerplatte (1) abstützt, dadurch gekennzeichnet, daß der Holm (4) mittels eines hydraulisch beaufschlagbaren Kolbens (17) od.dgl. in der bewegbaren Formträgerplatte (2) klemmbar und in der Stirnplatte (3) verschiebbar gehalten ist.

2. Schließeinheit nach Anspruch 1, dadurch gekennzeichnet, daß der Holm (4) bei der Stirnplatte (3) mit einem aufgeschraubten Holmzahnrad (15) versehen ist, das mit an der Stirnplatte (3) gelagerten Hydraulikkolben (16) über Keilspannelemente (27) gesichert ist, und daß ein pneumatisch beaufschlagter Kolben (14) vorgesehen ist, der das Holmzahnrad (15) verdrehsicher auf dem Holm (4) hält, wenn dieser von der feststehenden Formträgerplatte (1) abgezogen ist.

3. Schließeinheit nach Anspruch 2, dadurch gekennzeichnet, daß mehrere, vorzugsweise drei Keilspannelemente (27) vorgesehen sind, die zueinander im Winkel stehen.

4. Schließeinheit nach Anspruch 1, dadurch gekennzeichnet, daß an der Formträgerplatte (1) ein Motor (13) lagert, mittels dem das Verschrauben der Holmmutter (6) erfolgt, wobei sich unmittelbar vor der Holmmutter (6) ein Trägerzapfen (7) befindet, auf den die vom Holm (4) abgeschraubte Holmmutter (6) aufgeschoben wird.

5. Schließeinheit nach Anspruch 4, dadurch gekennzeichnet, daß der Trägerzapfen (7) mit einem Gewinde versehen ist, auf welches die Holmmutter (6) aufgeschraubt wird während sie vom Holm (4) abgeschraubt wird.

6. Schließeinheit nach Anspruch 4, dadurch gekennzeichnet, daß die Holmmutter (6) mit einem Zahnkranz (9) versehen ist, mit dem ein Ritzel (10) des Motors (13) kämmt.

7. Schließeinheit nach Anspruch 6, dadurch gekennzeichnet, daß das Ritzel (10) von einer Welle (11) getragen wird, die mit einem Ende an der feststehenden Formträgerplatte (1) lagert.

8. Schließeinheit nach Anspruch 1, dadurch gekennzeichnet, daß die Steuereinrichtung über Hydraulik- oder Pneumatikkolben zwei Holmmutterhälften (21) einer in einer Axialebene geteilten Holmmutter (20) auseinander und zueinander bewegt, die ein Holmende formschlüssig umfassen.

9. Schließeinheit nach Anspruch 8, dadurch gekennzeichnet, daß der Formschluß durch eine Nut-Federverbindung erzielt wird (Fig. 8).

10. Schließeinheit nach Anspruch 9, dadurch gekennzeichnet, daß die Nut einen Gewindegang (25) beschreibt.

Fig. 1

EP 0 313 035 A2

Fig. 2

EP 0 313 035 A2

Fig. 3

Fig. 4

Fig. 5

Fig. 6

22

21'

23

20

21

21

1

Fig.7

Fig. 8

Fig. 9

Fig. 10